# EUROPEAN PATENT SPECIFICATION

(11) **EP 1 566 115 B1**
(45) Date of publication and mention of the grant of the patent: **22.10.2008**
(21) Application number: 04006234.1
(22) Date of filing: 16.03.2004
(51) Int. Cl.: A46B 11/00

(54) **Cosmetic brush**
Kosmetikbürste
Brosse cosmétique

(30) Priority: 19.02.2004 KR 2004011020
(43) Date of publication of application: 24.08.2005
(73) Proprietor: BYUN, Young- Chul, Gangseo-Gu Seoul 157-010 (KR)
(72) Inventor: BYUN, Young- Chul, Gangseo-Gu Seoul 157-010 (KR)
(74) Representative: Wächter, Jochen

(56) References cited:
- EP-A- 0 284 166
- EP-A- 1 125 519
- CH-A- 538 829
- FR-A- 2 803 991
- US-A- 4 548 524

## Description

### 1. Field of the Invention

The present invention relates to a cosmetics brush, more particularly, a cosmetics brush including a sleeve type protection cap for protection of the brush during make-up, a main body and a brush member.

### 2. Description of the Related Art

In general, cosmetics are divided into powdery and/or liquid states. Recently, the cosmetic goods such as lip-stick or foundation are available in the liquid state to improve convenience for users. The liquid cosmetics, for example, is charged within a specified container generally having a pencil form and discharged out of an inner space of the container to an upper portion mounted by a cosmetic brush member of the container, when turning any portion of the container. Various forms and structures of such container have been proposed and used.

Conventional cosmetics brush which is generally constructed by integrating a brush member to a main body of the brush and is used by covering the brush member with alternative cosmetics when doing the make-up has an inconvenience to carry and handle it due to the separation of the cosmetics and the brush member, to cause a difficulty in using the brush.

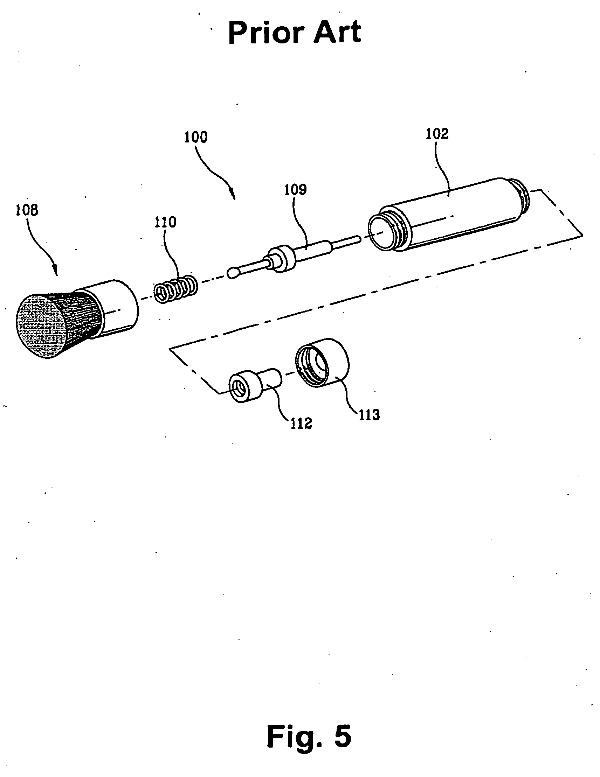

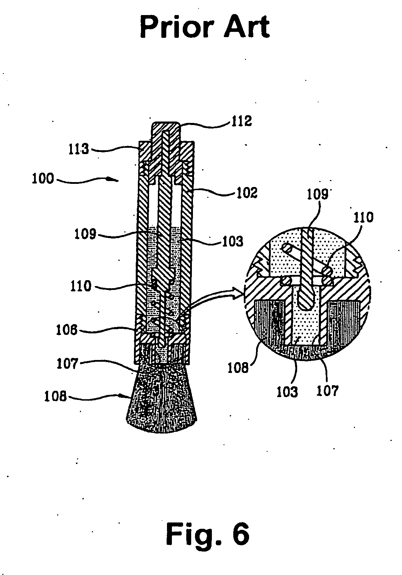

In recent years, different structures of cosmetic brushes which receive powdery cosmetics inside a container type body and discharge the cosmetics to a brush member by air pressure suitable to do the make-up, have been proposed and applied, for example, the cosmetics brush disclosed in Korean Utility Model Reg. No. 253,672 having the construction as shown in Figs. 5 and 6 attached herein below.

Such cosmetics brush includes a first body 102 in a tube form having openings at top and bottom ends to receive powdery cosmetics 103 inside; a second body 106 coupled to the lower peripheral side of the first body 102, having an exhaust nozzle 107 on a middle portion of the top side and a brush member 108 connected to the exhaust nozzle 107; an upward/downward delivery shaft 109 connected to a spring 110 at a peripheral side of a front end thereof leading the front end to be coupled with the exhaust nozzle 107 of the second body 106, the spring 110 being mounted on and supported by a peripheral side of the top end of the exhaust nozzle 107; and a top side cap 113 for the protruding top end of the upward/downward delivery shaft 109 outside of the upper portion of the brush and for supporting the top end.

In the above construction, the user pushes a button at the first body 102 joined to the top end of the upward/downward delivery shaft 109 and protruded upward when employing the cosmetics brush 100 to do the make-up. At this time, the spring 110 provided at the front end of such upward/downward delivery shaft 109 moves the shaft 109 in upward or downward directions so that the movement of the shaft 109 makes the powdery cosmetics 103 received inside the first body 102 to flow out to the external side, that is, to the brush member 108 through the exhaust nozzle 107 formed in the second body 106, to achieve a convenient use of the cosmetic brush.

Herein, the powdery cosmetics 103 discharged through such exhaust nozzle 107 is supplied to the brush member 108 by directly passing the front end of the upward/downward delivery shaft 109.

However, several problems exist in the conventional cosmetics brush as described above, for example, that since the powdery cosmetics 103 flows out to the brush member 108 by means of the front end of such upward/downward delivery shaft 109, the brush has not only a difficulty in constantly and continuously exhausting the powdery cosmetics 103 due to constructional restriction of the delivery shaft 109, but also a discomfort to use because the powdery cosmetics 103 is discharging to the brush member 108 by joggle of the cosmetics brush itself.

Further, another button 112 formed at the top side cap 113 which has a specified structure of being always protruded outside by the elastic force of the spring 110, has a disadvantage that the button 112 moves and causes undesirable exhaust of the powdery cosmetics 103 to the brush member 18 if the cosmetics brush is bumped against other items under carrying and holding conditions or is under external force. In addition, when the cosmetics brush is stored and/or held in high humidity conditions, or is not employed for a long time, the powdery cosmetics 103 contained in the first body 102 and the one remained in the exhaust nozzle 103 are hardened owing to moisture. Thus, the known cosmetics brush in prior art cannot smoothly exhaust the powdery cosmetics 103.

CH-538 829 A discloses a similar cosmetics brush according to the preamble of claim 1.

### SUMMARY OF THE INVENTION

It is an object of the present invention to solve the above problems, in particular, to provide a cosmetics brush including a sleeve type protection cap mounted around a peripheral side of a brush member for protection of the cosmetics brush and a main body, wherein liquid or powdery cosmetics stored inside the main body is discharged to the brush member simultaneously with filtration of the cosmetics through a filter to ensure an optimum condition of preferably exhausting the cosmetics in a desirable amount.

This object is solved by the features of claim 1.

### BRIEF DESCRIPTION OF THE DRAWINGS

The above object, features and advantages of the present invention will become more apparent to those skilled in the art from the following detailed description of preferred embodiments taken in conjunction with the accompanying drawings, in which:
Fig. 1 is a perspective view illustrating an example of a cosmetics brush according to the present invention;
Fig. 2 is an exploded perspective view illustrating the example of the cosmetics brush according to Fig. 1;
Fig. 3 is a cross-sectional view illustrating the cosmetics brush according to Fig. 1 in a state that the sleeve type protection cap is directed downward during holding and carrying the brush;
Fig. 4 is a cross-sectional view illustrating the cosmetics brush according to Fig. 1 in a state that the sleeve type protection cap is pulled outside;

Fig. 5 is a perspective view of a conventional cosmetics brush; and
Fig. 6 is an exploded perspective view of the conventional cosmetics brush of Fig. 5.

### DETAILED DESCRIPTION OF THE PREFERRED EMBODIMENT

The present invention will be described in more detail with reference to the accompanying drawings which are presented for purpose of illustration and should not be construed to limit the scope of the invention.

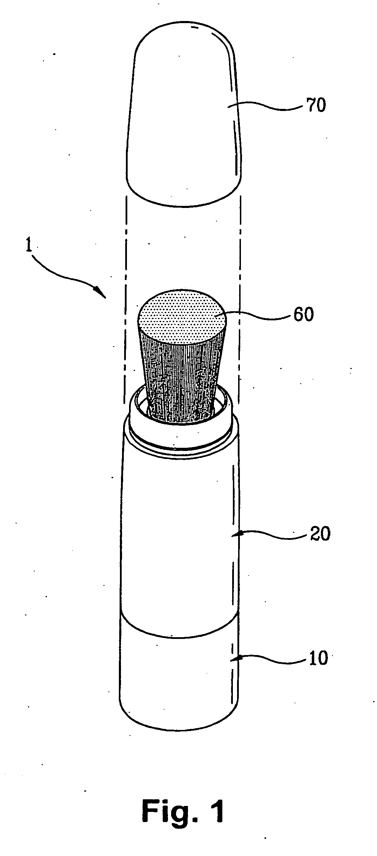

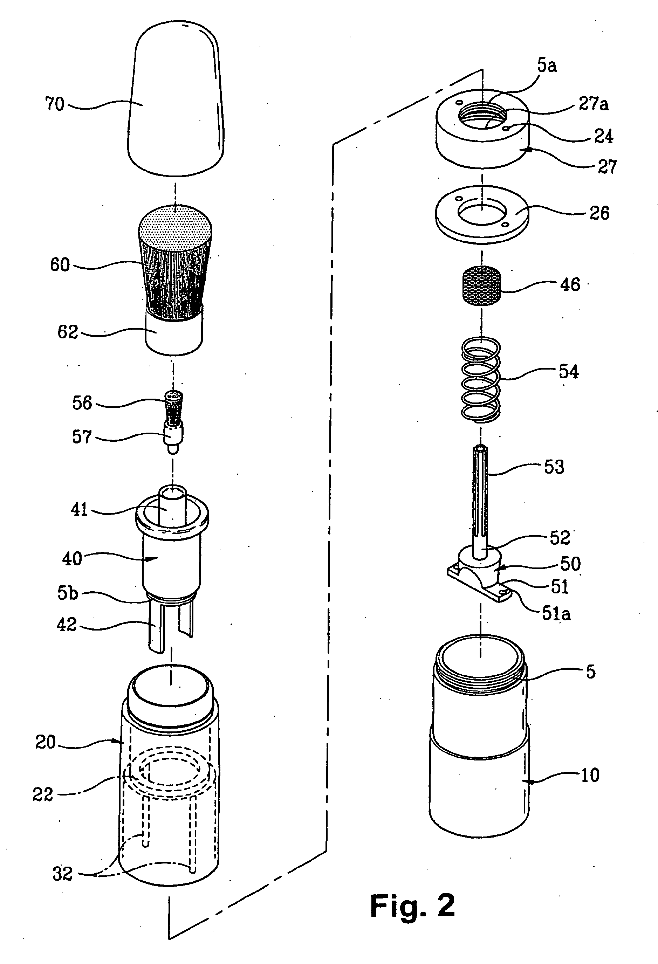

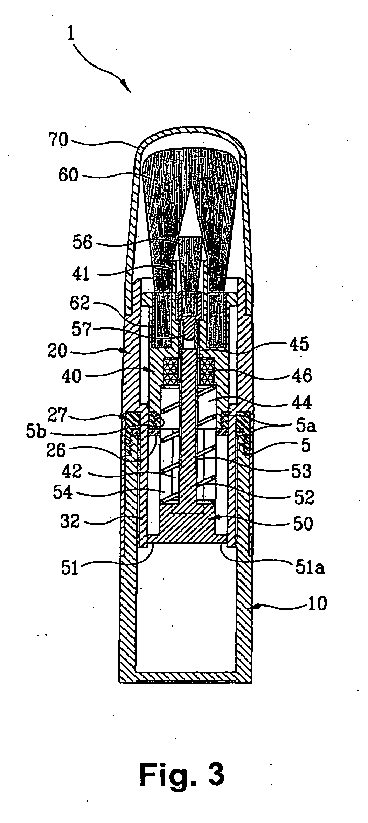

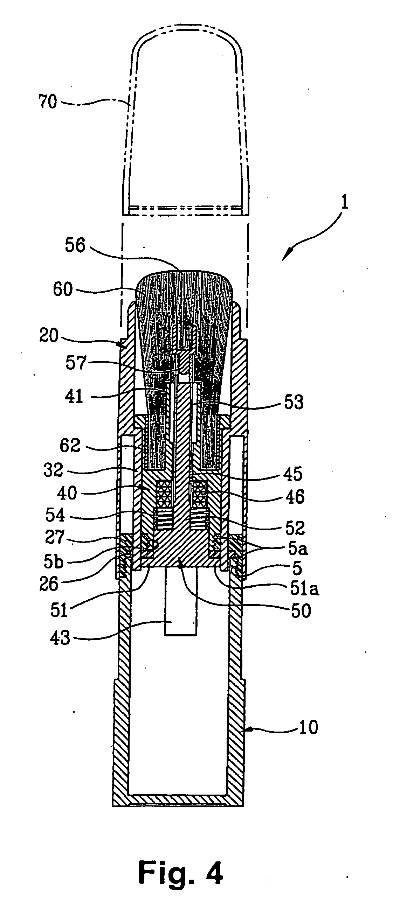

Fig. 1 illustrates a perspective view of an example of the cosmetics brush according to the present invention. Fig. 2 illustrates an exploded perspective view of the example of the cosmetics brush of Fig. 1. Fig. 3 shows a cross-sectional view illustrating the cosmetics brush according to Fig. 1 in a state that the sleeve type protection cap is directed downward during holding and carrying the brush. Fig. 4 shows a cross-sectional view illustrating the cosmetics brush according to Fig. 1 in a state that the sleeve type protection cap is pulled outside.

The cosmetics brush 1 of the present invention includes a main body 10 to receive powdery and/or liquid cosmetics (hereinafter, referring to as 'powder'), and a sleeve type protection cap 20 coupled to a top portion of the body 10 for enclosing a brush member 60 to protect it.

The protection cap 20 comprises an inner supporting wheel 22 having cylindrical supporting bars 32 elongated to both bottom sides of the wheel.

The inner supporting wheel of such constructed protection cap 20 is connected to a fixture cap 27 and an O-ring 26 fitted on the supporting bar 32.

The fixture cap 27 has a cross-section in form of a bottle cap having a punctured hole 27a on a center portion thereof, a screw portion 5a being formed over both inner sides of the fixture cap 27 and the punctured hole 27a.

An inner movable body 40 having a bridge shape and comprising a guidance piece 42 is fitted inside the upper portion of the protection cap 20. Another screw portion 5b formed on a lower portion of the protection cap 20 is screw-coupled to the screw portion 5a formed inside the punctured hole 27a in the fixture cap 27.

The protection cap 20, the inner movable body 40 and the fixture cap 27 are together integrated into an assembly, which also comprises a filter 46, an O-ring 26, a spring 54 and a movable body 50. The filter 46 is fitted into the inner movable body 40 while the O-ring 26 is fitted into the bottom portion of the fixture cap 27. The movable body 50 has a moving bar 52 with the spring 54 around and passing through a powder exhaust duct 41 of the inner movable body 40. On the top end of the moving bar 52 punctured through the duct 41, a push-cap 57 having an assisting brush 56 is fixed and connected.

Such movable body 50 is positioned within the guidance piece 42 protruded on a bottom portion of the inner movable body 40, so that when the movable body 50 moves upward/downward, it can conduct perpendicular motion along the guidance piece 42. Around the moving bar 52, several vertical holes 53 are punctured in top and bottom directions to pass the powder.

Moreover, the bottom end of the supporting bar 32 is inserted and fixed into a fitting hole 51a of the movable body 50 to form a gap spaced between the movable body 50 and the sleeve type protection cap 20 by a constant interval. Such O-ring 26 and a guidance hole 24 of the fixture cap 27 are packed onto the supporting bars 32. The spring 54 is placed and extended between the inner movable body 40 and the movable body 50 as a typically initial condition of the cosmetics brush.

A brush member 60 bundled by a clip 62 is fixed around the powder exhaust duct 41.

An assembly formed by the brush 60 fixed around the powder exhaust duct 41 is connected at a lower portion thereof with the main body 10 charged with the powder by means of screw-connection manner while covering the top portion of the brush member 60 with a cover 70, thereby resulting in the final cosmetics brush assembly 1 as an example of the present invention.

Such main body 10 has a screw member 5 coupled with the screw portion 5a of the fixture cap 27.

Based on the above structure of the cosmetics brush according to the present invention, the functional effect of the cosmetics brush will be described in more detail as follows.

As shown in Fig. 3, the cosmetics brush 1 according to the present invention receives the powder and has the protection cap 27 and the movable body 50 going down by the elastic force of the spring 54 to close the exhaust nozzle 45 formed on the lower portion of the power exhaust duct 41 when it is normally held and/or carried. In order to do the make-up with the above state of the cosmetics brush, the user should grip the main body 10 by one hand, while pulling out the protection cap 20 and forcing the movable body 50 integrated with the protection cap 20 by means of the supporting bar 32 to slide upward along the guidance piece 42 formed on lower portion of the inner movable body 40. This applies a pressure to the inside of the inner movable body 40. As a result, the powder in the main body 10 flows to and passes the vertical holes 53 formed around a peripheral side of the movable bar 52, the exhaust nozzle 45 and the powder exhaust duct 41 in this order, as shown in Fig. 4. The passed powder flows to and is exhausted to the assistant brush 56 and the brush 60 in a constant amount suitable to do the make-up.

Furthermore, the powder discharged out of the powder exhaust duct 41 passes through a filter 46 formed in the lower portion of the inner movable body 40 to remove impurities or agglomerates before the exhausting process, so that only fine powders can flow into the powder exhaust duct 41.

Then, by releasing the pulling force applied to the sleeve type protection cap 20, the protection cap 20 and the movable body 50 go down together and return to their original positions by the elastic force of the spring 54 located between the inner movable body 40 and the movable body 50.

As described above, the repetition of pulling and releasing the protection cap 20 induces the powdery cosmetics charged inside the main body 10 to be exhausted to the assisting brush 56 and the brush member 60 and allows the user to do the make-up.

Although figures attached herewith show the brush member 60 as faced upward for a better illustration of the present invention, it is possible to easily exhaust the powdery cosmetics by directing the brush member 60 downward and pulling the protection cap 20, when the cosmetics brush is used.

## Claims

1. A cosmetics brush including:
at least one brush (56, 60),
a main body (10) containing powdery or liquid cosmetics and covered by a fixture cap (27),
an inner body (40) having a cosmetics exhaust duct (41);
a sleeve-type protection cap (20);
a movable body (50); and
a spring (54) for preventing flow of cosmetics at a normal condition by pushing the movable body (50) in a predetermined direction;
wherein the movable body (50) is movable against the force of the spring (54) in order to ensure that the cosmetics contained in the main body (10) are supplied to the at least one brush (56, 60);
**characterized in that**
the inner body (40) is connected to the fixture cap (27) such that the inner body (40) and the main body (10) are integrated into an assembly by means of the fixture cap (27);
the fixture cap (27) has two guidance holes (24);
the protection cap (20) has an inner supporting wheel (22) having two supporting bars (32) on a lower portion thereof, the supporting bars (32) extending through the guidance holes (24) in the fixture cap (27);
the movable body (50) is fixed to the supporting bars (32), the movable body (50) and the protection cap (20) thus being integrated into an assembly and moving together;
the spring is mounted between the inner body (40) and the movable body (50); and
the movable body (50) is movable in a direction towards the inner body (40) against the force of the spring (54) in order to generate air pressure to ensure that the cosmetics contained in the main body (10) are supplied to the at least one brush (56, 60).

2. The cosmetics brush according to Claim 1, wherein it further includes a moving bar (52) having vertical holes (53) for delivering powdery cosmetic on top portion of the movable body (50) extended and fitted into the powder exhaust duct (41), and a push-cap (57) having an assisting brush (56) fitted at top end of the moving bar (52).

## Patentansprüche

1. Kosmetikpinsel mit:
wenigstens einem Pinsel (56, 60);
einem Hauptkörper (10), der pulverförmige oder flüssige Kosmetika enthält und von einer Einbaukappe (27) bedeckt ist;
einem inneren Körper (40) mit einem Auslasskanal (41) für die Kosmetika;
einer hülsenartigen Schutzkappe (20);
einem beweglichen Körper (50);
und einer Feder (54) zum Verhindern eines Flusses von Kosmetika in einem normalen Zustand, indem sie den beweglichen Körper (50) in eine vorbestimmte Richtung drückt;
wobei der bewegliche Körper (50) gegen die Kraft der Feder (54) bewegbar ist, um sicherzustellen, dass die Kosmetika, die im Hauptkörper (10) enthalten sind, an den wenigstens einen Pinsel (56, 60) abgegeben werden;
**dadurch gekennzeichnet, dass**
der innere Körper (40) mit der Einbaukappe (27) verbunden ist, sodass der innere Körper (40) und der Hauptkörper (10) mittels der Einbaukappe (27) zu einer Baugruppe zusammengefasst sind;
die Einbaukappe (27) zwei Führungslöcher (24) besitzt;
die Schutzkappe (20) ein inneres Stützrad (22) mit zwei Stützstiften (32) an einem unteren Abschnitt davon besitzt, wobei sich die Stützstifte (32) durch die Führungslöcher (24) in der Einbaukappe (27) erstrecken;
der bewegliche Körper (50) an den Stützstiften (32) befestigt ist, wodurch der bewegliche Körper (50) und die Schutzkappe (20) zu einer Baugruppe zusammengefasst sind und sich gemeinsam bewegen;
die Feder zwischen dem inneren Körper (40) und dem beweglichen Körper (50) befestigt ist; und
der bewegliche Körper (50) in eine Richtung hin zum inneren Körper (40) gegen die Kraft der Feder (54) bewegbar ist, um einen Luftdruck zu erzeugen, um sicherzustellen, dass die Kosmetika, welche im Hauptkörper (10) enthalten sind, an den wenigstens einen Pinsel (56, 60) abgegeben werden.

2. Kosmetikpinsel nach Anspruch 1, wobei er außerdem einen beweglichen Stift (52) mit senkrechten Löchern (53) zum Abgeben von pulverförmigen Kosmetika an einem oberen Abschnitt des beweglichen Körpers (50) aufweist, wobei sich die bewegliche Spitze (52) in den Auslasskanal (41) für das Pulver hinein erstreckt und darin eingepasst ist und wobei eine Druckkappe (57) mit einem Hilfspinsel (56) am oberen Ende des beweglichen Stifts (52) aufgesetzt ist.

## Revendications

1. Brosse cosmétique incluant :
au moins une brosse (56, 60),
un corps principal (10) contenant un produit cosmétique en poudre ou sous forme liquide et recouvert par un couvercle de serrage (27),
un corps intérieur (40) ayant une gaine d'évacuation de produit cosmétique (41) ;
un couvercle de protection de type manchon (20) ;
un corps mobile (50) ; et
un ressort (54) pour empêcher l'écoulement du produit cosmétique pendant une condition normale en poussant le corps mobile (50) dans une direction prédéterminée ;
dans laquelle le corps mobile (50) est mobile à l'encontre de la force du ressort (54) afin d'assurer que le produit cosmétique contenu dans le corps principal (10) est délivré à la au moins une brosse (56, 60) ;
**caractérisée en ce que**
le corps intérieur (40) est connecté au couvercle de serrage (27) de sorte que le corps intérieur (40) et le corps principal (10) sont intégrés dans un assemblage au moyen du couvercle de serrage (27) ;
le couvercle de serrage (27) a deux trous de guidage (24) ;
le couvercle de protection (20) a une rondelle de support intérieure (22) ayant deux barres de support (32) sur une partie inférieure de celle-ci, les barres de support (32) s'étendant à travers les trous de guidage (24) dans le couvercle de serrage (27) ;
le corps mobile (50) est fixé aux barres de support (32), le corps mobile (50) et le couvercle de protection (20) étant ainsi intégrés dans un assemblage et se déplaçant conjointement ;
le ressort est monté entre le corps intérieur (40) et le corps mobile (50) ; et
le corps mobile (50) est mobile dans une direction vers le corps intérieur (40) à l'encontre de la force du ressort (54) afin de générer une pression d'air pour assurer que le produit cosmétique contenu dans le corps principal (10) est délivré à la au moins une brosse (56, 60).

2. Brosse cosmétique selon la revendication 1, laquelle inclut en outre une barre mobile 52 ayant des trous verticaux 53 pour délivrer un produit cosmétique en poudre sur la partie supérieure du corps mobile 50 étendu et agencé dans la gaine d'évacuation de poudre 41, et un capuchon de poussée 57 ayant une brosse auxiliaire 56 agencée à l'extrémité supérieure de la barre mobile 52.
